# EUROPÄISCHE PATENTANMELDUNG

(11) **EP 2 854 262 A1**
(43) Veröffentlichungstag der Anmeldung: **01.04.2015**
(21) Anmeldenummer: 13185971.2
(22) Anmeldetag: 25.09.2013
(51) Int. Cl.: H02K 9/20, F28D 15/02, H02K 9/19

(54) **Kühlvorrichtung für eine elektrische Maschine**

(71) Anmelder: Siemens Aktiengesellschaft, 80333 München (DE)
(72) Erfinder: Grau Sorarrain, Esteban, 40215 Düsseldorf (DE); Jäkel, Christian, 45468 Mülheim an der Ruhr (DE); Koebe, Mario, 45478 Mülheim an der Ruhr (DE); Kowalski, Matthias, 45470 Mülheim an der Ruhr (DE); Lehmann, Christoph, 47506 Neukirchen-Vluyn (DE); Mashkin, Andrey, 50672 Köln (DE); Plotnikova, Olga, 42369 Wuppertal (DE); Schild, Carolin, 45478 Mülheim an der Ruhr (DE)

(57) **Zusammenfassung**

Die Erfindung betrifft eine Kühlvorrichtung für eine elektrische Maschine mit mindestens einer abgeschlossenen Kapillare (6), innerhalb derer ein Kühlfluid (13, 14) sich befindet und die in eine Aussparung (5) eines Blechpakets (1) der elektrischen Maschine derart eingebracht ist, dass die Kapillare (6) wärmeleitend mit dem Blechpaket (1) verbunden ist und teilweise aus dem Blechpaket (1) herausragt, so dass die Kapillare (6) ein außerhalb des Blechpakets (1) angeordnetes kaltes Ende (7) und ein innerhalb des Blechpakets (1) angeordnetes warmes Ende (7) aufweist, wobei das Kühlfluid (13, 14) und der Füllgrad der Kapillare (6) mit dem Kühlfluid (13, 14) derart gewählt ist, dass im Betrieb der elektrischen Maschine ein Eintrag (17) von Wärme von dem Blechpaket (1) in die Kapillare (6) zu einer Verdampfung des Kühlfluids (13, 14) führt, und das kalte Ende (8) der Kapillare (6) derart kühlbar ist, dass der bei der Verdampfung entstehende Dampf (14) kondensiert und die in die Kapillare (6) eingetragene (17) Wärme aus der Kapillare abführbar (18) ist.

## Beschreibung

Die Erfindung betrifft eine Kühlvorrichtung für eine elektrische Maschine und eine elektrische Maschine mit der Kühlvorrichtung.

In einer elektrischen Maschine, wie beispielsweise ein Motor oder ein Generator, wird elektrische Energie in Rotationsenergie beziehungsweise Rotationsenergie in elektrische Energie umgewandelt. Die elektrische Maschine weist einen Rotor und einen Stator auf, wobei der Stator ein Blechpaket aufweist, in dem elektrische Leiter eingelegt sind und als Wicklung ausgeführt sind. Um die Leiter gegeneinander, gegen die Umgebung und gegen das Blechpaket elektrisch zu isolieren, sind die elektrischen Leiter von einer Hauptisolation umhüllt. Im Betrieb der elektrischen Maschine heizen sich die Leiter aufgrund der in ihnen fließenden elektrischen Ströme auf. Durch Wärmeleitung wird die in den Leitern freigesetzte Wärme auch auf die Hauptisolation und das Blechpaket übertragen.

Weil nach einem Überschreiten einer maximal zulässigen Temperatur eine thermische Zersetzung der Hauptisolation eintritt, ist eine Begrenzung der Temperatur der elektrischen Maschine auf die maximal zulässige Temperatur erforderlich. Nach einer fortschreitenden Zersetzung kann es zu einem elektrischen Durchschlag durch die Hauptisolation kommen, was zu einer Verkürzung der Lebensdauer der elektrischen Maschine führt. Um das Überschreiten der maximal zulässigen Temperatur zu unterbinden, werden herkömmlich in dem Blechpaket Kühlkanäle vorgesehen, durch die im Betrieb der elektrischen Maschine ein Gas, wie beispielsweise Luft oder Wasserstoff, geströmt wird, um das Blechpaket zu kühlen. Es ist jedoch nachteilig, dass damit Wärme nur mit geringen Wärmestromdichten aus dem Blechpaket abgeführt werden kann. Die maximale Leistung, mit der die elektrische Maschine betreibbar ist, ist begrenzt durch die aus dem Blechpaket abführbare Wärme.

Aufgabe der Erfindung ist es, eine Kühlvorrichtung für eine elektrische Maschine und eine elektrische Maschine mit der Kühlvorrichtung zu schaffen, wobei mit der Kühlvorrichtung hohe Wärmestromdichten aus dem Blechpaket abführbar sind.

Die erfindungsgemäße Kühlvorrichtung für eine elektrische Maschine weist mindestens eine abgeschlossene Kapillare auf, innerhalb derer ein Kühlfluid sich befindet und die in eine Aussparung eines Blechpakets der elektrischen Maschine derart eingebracht ist, dass die Kapillare wärmeleitend mit dem Blechpaket verbunden ist und teilweise aus dem Blechpaket herausragt, so dass die Kapillare ein außerhalb des Blechpakets angeordnetes kaltes Ende und ein innerhalb des Blechpakets angeordnetes warmes Ende aufweist, wobei das Kühlfluid, der thermodynamische Zustandspunkt des Kühlfluids und der Füllgrad der Kapillare mit dem Kühlfluid derart gewählt ist, dass im Betrieb der elektrischen Maschine ein Eintrag von Wärme von dem Blechpaket in die Kapillare zu einer Verdampfung des Kühlfluids führt und das kalte Ende der Kapillare derart kühlbar ist, dass der bei der Verdampfung entstehende Dampf kondensiert und die in die Kapillare eingetragene Wärme aus der Kapillare abführbar ist.

Beim Abführen der Wärme aus dem Blechpaket mittels der erfindungsgemäßen Kühlvorrichtung werden die Verdampfungsenthalphie und die Kondensationsenthalphie des Kühlfluids ausgenutzt. Dadurch ist im Vergleich zu einer herkömmlichen Kühlung, bei der die Wärme auf ein Gas übertragen wird, die Wärme mit einer wesentlich höheren Wärmestromdichte aus dem Blechpaket abführbar. Dadurch kann bei einer gegebenen Länge des Blechpakets die elektrische Maschine mit einer höheren Leistung betrieben werden. Es ist auch möglich, bei einer gegebenen Leistung der elektrischen Maschine das Blechpaket kürzer auszuführen. Auch ist es möglich eine bestehende elektrische Maschine mit der erfindungsgemäßen Kühlvorrichtung nachzurüsten, so dass die bestehende elektrische Maschine mit einer höheren Leistung betrieben werden kann.

Es ist bevorzugt, dass das Kühlfluid und das Material der Kapillare derart gewählt sind, dass die Adhäsion zwischen der Kapillare und dem Kühlfluid größer als die Kohäsion des Kühlfluids ist, sowie die Kapillare derart dünn ausgebildet ist, dass sich im Betrieb der elektrischen Maschine unabhängig von einem Einfluss der Schwerkraft eine Zirkulationsströmung des Kühlfluids in der Kapillare ausbildet, wobei die Zirkulationsströmung derart ausgebildet ist, dass sich an der Innenseite der Kapillare ein Film aus Flüssigkeit bildet, die sich im Wesentlichen von dem kalten Ende zu dem warmen Ende bewegt, und ummantelt von dem Film der Dampf sich im Wesentlichen von dem warmen Ende zu dem kalten Ende bewegt. Dadurch ist vorteilhaft sichergestellt, dass sich die Zirkulationsströmung unabhängig von der Orientierung der Kapillare einstellt. So kann das kalte Ende oberhalb, unterhalb oder in einer gleichen horizontalen Ebene des warmen Endes angeordnet sein. Die Zirkulationsströmung hat vorteilhaft einen hohen Massenstrom, wodurch auch die Wärmestromdichte, mit der die Wärme aus dem Blechpaket abführbar ist, hoch ist.

Der Innendurchmesser der Kapillare beträgt bevorzugt von 1 mm bis 5 mm. Bei kleineren Durchmessern ist es nicht möglich, dass in einem Querschnitt der Kapillare sowohl eine Phase aus der Flüssigkeit als auch eine Phase aus dem Dampf gleichzeitig vorliegen. Bei einem größeren Durchmesser reicht die Kapillarwirkung nicht aus, dass bei einer vertikalen Orientierung der Kapillare, bei der das kalte Ende unterhalb des warmen Endes angeordnet ist, die Flüssigkeit sich entgegen der Schwerkraft nach oben bewegt.

Die Kühlvorrichtung weist bevorzugt eine Flüssigkeitskühlung auf, insbesondere eine Wasserkühlung, mittels der das Kalte Ende der Kapillare kühlbar ist. Es ist bevorzugt, dass die Kühlvorrichtung eine Kühlrippe aufweist, mittels der das kalte Ende der Kapillare kühlbar ist. Dabei ist bevorzugt, dass die Kühlrippen gasgekühlt sind. Mittels der Flüssigkeitskühlung und/oder Kühlrippe ist vorteilhaft sichergestellt, dass der Dampf im Bereich des kalten Endes kondensiert und die bei der Kondensation freigesetzte Kondensationsenthalphie aus der Kapillare abgeführt wird.

Bevorzugtermaßen weist das Blechpaket in Umfangsrichtung nebeneinander angeordnete Nuten auf, in die elektrische Leiter eingebracht sind, und das warme Ende der Kapillare ist zwischen zwei benachbarten Nuten angeordnet. Weil die aus dem Blechpaket abzuführende Wärme insbesondere in den elektrischen Leitern freigesetzt wird, ist der Bereich zwischen zwei benachbarten Nuten der heißeste des Blechpakets. Indem das warme Ende der Kapillare in diesem Bereich angeordnet ist, ist vorteilhaft der heißeste Bereich des Blechpakets mit der erfindungsgemäßen Kühlvorrichtung kühlbar.

Das Kühlfluid ist bevorzugt Wasser, ein Alkohol, insbesondere Methanol, Ethanol, Propanol und/oder Butanol, und/oder ein Alkan, insbesondere Propan, Butan, Pentan, Hexan und/oder Heptan. Die genannten Substanzen sind vorteilhaft, da sie über ein großes Zweiphasengebiet verfügen, was bedeutet, dass sie über einen großen Druckbereich und Temperaturbereich sowohl flüssig als auch gasförmig vorliegen. Wasser und die Alkohole sind besonders vorteilhaft, weil sie eine große Verdampfungsenthalphie haben. Dabei gilt, dass mit größeren Verdampfungsenthalphien die Wärme aus dem Blechpaket mit größeren Wärmestromdichten abführbar ist.

Bevorzugtermaßen ist der Füllgrad der Kapillare mit dem Kühlfluid derart gewählt, dass das molare Volumen des Kühlfluids in der Kapillare im Wesentlichen das kritische molare Volumen ist. Damit liegt das Kühlfluid über den breitestmöglichen Druckbereich sowohl flüssig als auch gasförmig vor, so dass auch die Kühlvorrichtung in dem breitest möglichen Druckbereich funktioniert.

Es ist bevorzugt, dass eine Mehrzahl an Kapillaren vorgesehen ist, die gleichmäßig über den Umfang und in Axialrichtung verteilt über das Blechpaket vorgesehen sind. Damit ist vorteilhaft erreicht, dass das gesamte Blechpaket gleichmäßig kühlbar ist.

Die erfindungsgemäße elektrische Maschine weist die erfindungsgemäße Kühlvorrichtung auf. Es ist bevorzugt, dass die elektrische Maschine ein elektrischer Generator ist. Alternativ ist bevorzugt, dass die elektrische Maschine ein elektrischer Motor ist.

Im Folgenden wird anhand der beigefügten schematischen Zeichnungen die Erfindung näher erläutert. Es zeigen:
- Figur 1: eine Ansicht eines Blechpakets mit einer Kühlvorrichtung,
- Figur 2: einen Schnitt durch eine Kapillare und
- Figur 3: ein p*V̅*-Diagramm eines Kühlfluids.

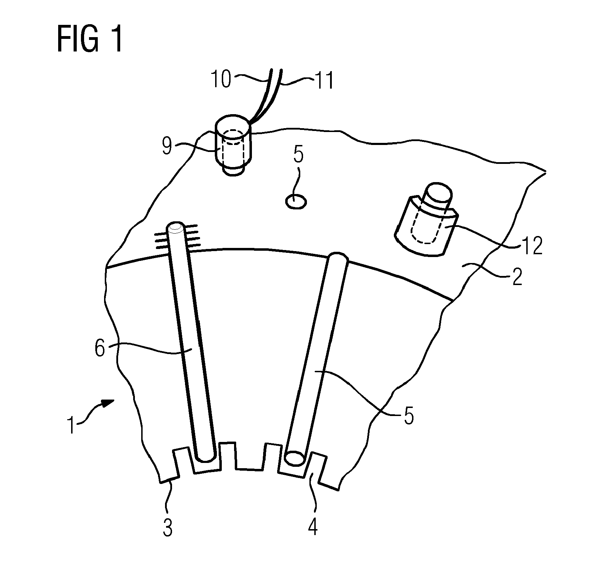

Wie es aus Figur 1 ersichtlich ist, weist eine elektrische Maschine ein ringförmiges Blechpaket 1 auf, wobei in Figur 1 lediglich ein Ausschnitt des Blechpakets 1 dargestellt ist. An der radialen Innenseite 3 des Blechpakets 1 sind in Umfangsrichtung nebeneinander liegend und sich im Wesentlichen axial erstreckende Nuten 4 eingebracht. In die Nuten 4 sind elektrische Leiter eingebracht, wobei die elektrischen Leiter von einer Hauptisolation umhüllt sind, so dass die elektrischen Leiter gegen das Blechpaket 1 elektrisch isoliert sind. In das Blechpaket 1 sind Aussparungen 5 angeordnet, die sich von einem Bereich zwischen zwei benachbarten Nuten 4 bis zu der radialen Außenseite 2 des Blechpakets 1 erstrecken.

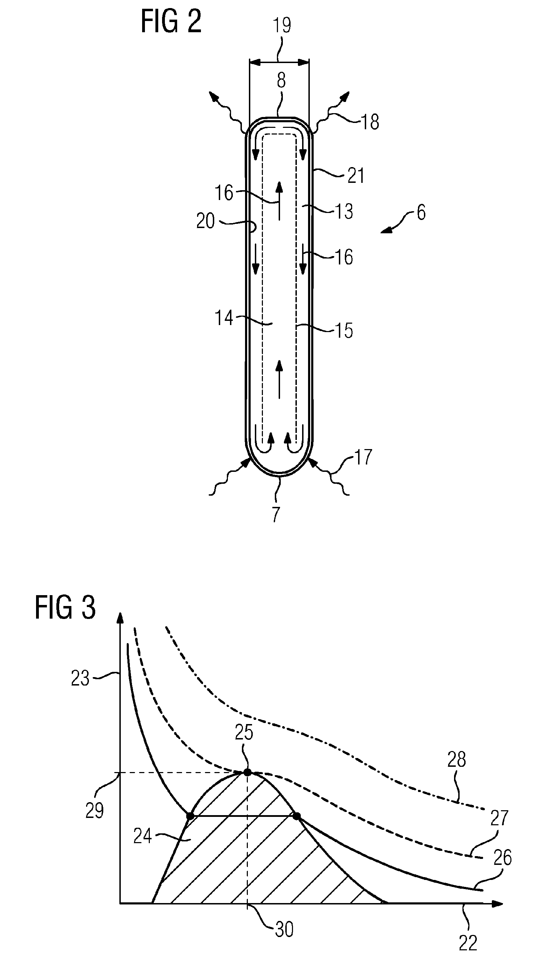

In jede der Aussparungen 5 ist jeweils eine Kapillare 6 eingebracht. Die Kapillaren 6 sind dabei wärmeleitend mit dem Blechpaket 1 kontaktiert. Um die Wärmeleitfähigkeit zu erhöhen kann beispielsweise zwischen dem Blechpaket 1 und der Kapillare 6 eine Wärmeleitpaste eingebracht sein. Wie es aus Fig. 2 hervorgeht, weist die Kapillare 6 ein zylinderförmiges Rohr auf, dessen beiden Enden geschlossen sind, so dass die Kapillare 6 derart abgeschlossen ist, dass kein Fluid in die Kapillare 6 eintreten oder austreten kann. Die Kapillare 6 ist länger als die Aussparung 5, so dass sie eingebracht in die Aussparung 5 ein kaltes Ende 8 aufweist, welches außerhalb des Blechpakets 1 angeordnet ist, und ein warmes Ende 7 aufweist, welches innerhalb des Blechpakets 1 angeordnet ist. Das warme Ende 7 ist dabei zwischen zwei benachbarten Nuten 4 angeordnet.

Im Betrieb der elektrischen Maschine ist das kalte Ende 8 kühlbar, wobei in Figur 1 zwei verschiedene Ausführungsformen der Kühlung dargestellt sind. In einer ersten Ausführungsform ist das kalte Ende 8 von einer Kappe 9 ummantelt, an die eine Kühlfluidzuleitung 10 und eine Kühlfluidableitung 11 angeschlossen ist. Eine Kühlflüssigkeit, insbesondere Wasser, wird via die Kühlfluidzuleitung 10 in die Kappe 9 eingeleitet, wo das Kühlfluid Wärme von der Kapillare 6 aufnimmt. Die in der Kappe 9 aufgewärmte Flüssigkeit wird via die Kühlfluidableitung 11 aus der Kappe 9 abgeleitet. In einer zweiten Ausführungsform ist das kalte Ende 8 von einer Kühlrippe 12 ummantelt. Die Kühlrippe 12 kann beispielsweise mittels einer Luftströmung gekühlt werden.

Wie es aus Figur 2 ersichtlich ist, ist die Kapillare 6 mit einem Kühlfluid gefüllt, wobei sich im Betrieb der elektrischen Maschine eine Zirkulationsströmung des Kühlfluids innerhalb der Kapillare ausbildet. Dazu müssen das Kühlfluid und der Füllgrad der Kapillare 6 mit dem Kühlfluid derart gewählt werden, dass im Betrieb der elektrischen Maschine das Kühlfluid gleichzeitig sowohl als eine Flüssigkeit 13 als auch als ein Dampf 14 vorliegt. Durch die Kapillarwirkung liegt die Flüssigkeit 13 an der Innenseite 20 der Kapillare 6 an. Die Flüssigkeit 13 bildet somit einen im Wesentlichen zylinderförmigen Ring. Der Dampf 14 befindet sich im Inneren dieses zylinderförmigen Rings, wodurch eine im Wesentlichen zylinderförmige Phasengrenze 15 zwischen der Flüssigkeit 13 und dem Dampf 14 ausgebildet wird. Ein Wärmeeintrag 17 von dem Blechpaket 1 in die Kapillare 6 führt zu einer Verdampfung der Flüssigkeit 13. Durch die Kapillarwirkung wird verdampfte Flüssigkeit durch nachströmende Flüssigkeit ersetzt, wodurch sich eine Strömungsrichtung 16 der Flüssigkeit von dem kalten Ende 8 zu dem warmen Ende 7 ergibt. Der Dampf 14 wird an dem kalten Ende 8 kondensiert, wodurch sich eine Strömungsrichtung 16 des Dampfs 14 von dem warmen Ende 7 zu dem kalten Ende 8 ergibt. Durch die Kühlung des kalten Endes 8 erfolgt eine Wärmeabfuhr 18 aus der Kapillare 6.

In Figur 3 ist ein p*V̅*-Diagramm des Kühlfluids dargestellt. Aufgetragen ist über der Abszisse 22 das molare Volumen *V̅* des Kühlfluids und über der Ordinate 23 der Druck p des Kühlfluids. Schraffiert dargestellt in Fig. 3 ist ein Zweiphasengebiet 24, innerhalb dessen das Kühlfluid sowohl als Flüssigkeit 13 als auch Dampf 14 vorliegt. Zu kleineren molaren Volumina relativ zu dem Zweiphasengebiet 24 liegt das Kühlfluid als Flüssigkeit 13 vor, zu größeren molaren Volumina relativ zu dem Zweiphasengebiet 24 liegt das Kühlfluid als Dampf 14 vor. Das Maximum des Zweiphasengebiets 24 ist der kritische Punkt 25. Dargestellt ist eine erste Isotherme 26, welche durch das Zweiphasengebiet 24 verläuft, eine zweite Isotherme 27, welche durch dem kritischen Punkt 25 geht, und eine dritte Isotherme 28, welche eine höhere Temperatur als die kritische Isotherme hat. Damit eine Verdampfung und Kondensation des Kühlfluids stattfinden kann, muss sich das Kühlfluid im Betrieb der elektrischen Maschine innerhalb des Zweiphasengebiets befinden. Der Füllgrad ist demnach derart zu wählen, dass sich dazu eine in dem p*V̅*-Diagramm vertikal verlaufende Isochore ergibt, welche das Zweiphasengebiet 24 schneidet. Bevorzugt ist es dabei, die kritische Isochore, welche den kritischen Punkt 25 schneidet, zu wählen, so dass das Kühlfluid über den breitestmöglichen Druckbereich im Zweiphasengebiet 24 vorliegt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kühlvorrichtung für eine elektrische Maschine, mit mindestens einer abgeschlossenen Kapillare (6), innerhalb derer ein Kühlfluid (13, 14) sich befindet und die in eine Aussparung (5) eines Blechpakets (1) der elektrischen Maschine derart eingebracht ist, dass die Kapillare (6) wärmeleitend mit dem Blechpaket (1) verbunden ist und teilweise aus dem Blechpaket (1) herausragt, so dass die Kapillare (6) ein außerhalb des Blechpakets (1) angeordnetes kaltes Ende (7) und ein innerhalb des Blechpakets (1) angeordnetes warmes Ende (7) aufweist,
wobei das Kühlfluid (13, 14) und der Füllgrad der Kapillare (6) mit dem Kühlfluid (13, 14) derart gewählt ist, dass im Betrieb der elektrischen Maschine ein Eintrag (17) von Wärme von dem Blechpaket (1) in die Kapillare (6) zu einer Verdampfung des Kühlfluids (13, 14) führt, und das kalte Ende (8) der Kapillare (6) derart kühlbar ist, dass der bei der Verdampfung entstehende Dampf (14) kondensiert und die in die Kapillare (6) eingetragene (17) Wärme aus der Kapillare abführbar (18) ist.

2. Kühlvorrichtung gemäß Anspruch 1,
wobei das Kühlfluid (13, 14) und das Material der Kapillare (6) derart gewählt sind, dass die Adhäsion zwischen der Kapillare (6) und dem Kühlfluid (13, 14) größer als die Kohäsion des Kühlfluids (13, 14) ist, sowie die Kapillare (6) derart dünn ausgebildet ist, dass sich im Betrieb der elektrischen Maschine unabhängig von einem Einfluss der Schwerkraft eine Zirkulationsströmung des Kühlfluids (13, 14) in der Kapillare (6) ausbildet,
wobei die Zirkulationsströmung derart ausgebildet ist, dass sich an der Innenseite (20) der Kapillare (6) ein Film aus Flüssigkeit (13) bildet, die sich im Wesentlichen von dem kalten Ende (8) zu dem warmen Ende (7) bewegt, und ummantelt von dem Film der Dampf (14) sich im Wesentlichen von dem warmen Ende (7) zu dem kalten Ende (8) bewegt.

3. Kühlvorrichtung gemäß Anspruch 2, wobei der Innendurchmesser (19) der Kapillare (6) von 1 mm bis 5 mm beträgt.

4. Kühlvorrichtung gemäß einem der Ansprüche 1 bis 3, wobei die Kühlvorrichtung eine Flüssigkeitskühlung aufweist, insbesondere eine Wasserkühlung, mittels der das kalte Ende (8) der Kapillare (6) kühlbar ist.

5. Kühlvorrichtung gemäß einem Ansprüche 1 bis 4, wobei die Kühlvorrichtung eine Kühlrippe (12) aufweist, mittels der das kalte Ende (8) der Kapillare (6) kühlbar ist.

6. Kühlvorrichtung gemäß einem der Ansprüche 1 bis 5, wobei das Blechpaket (1) in Umfangsrichtung nebeneinander angeordnete Nuten (4) aufweist, in die elektrische Leiter eingebracht sind, und das warme Ende (7) der Kapillare (6) zwischen zwei benachbarten Nuten (4) angeordnet ist.

7. Kühlvorrichtung gemäß einem Ansprüche 1 bis 6, wobei das Kühlfluid (13, 14) Wasser, ein Alkohol, insbesondere Methanol, Ethanol, Propanol und/oder Butanol, und/oder ein Alkan, insbesondere Propan, Butan, Pentan, Hexan und/oder Heptan ist.

8. Kühlvorrichtung gemäß einem der Ansprüche 1 bis 7, wobei der Füllgrad der Kapillare (6) mit dem Kühlfluid (13, 14) derart gewählt ist, dass das molare Volumen des Kühlfluids (13, 14) in der Kapillare (6) im Wesentlichen das kritische molare Volumen ist.

9. Kühlvorrichtung gemäß einem der Ansprüche 1 bis 8, wobei eine Mehrzahl an Kapillaren (6) vorgesehen ist, die gleichmäßig über den Umfang und in Axialrichtung verteilt über das Blechpaket (1) vorgesehen sind.

10. Elektrische Maschine mit einer Kühlvorrichtung gemäß einem der Ansprüche 1 bis 9.
